# FASCICULE DE BREVET EUROPEEN

(11) **EP 0 349 377 B1**
(45) Date de publication et mention de la délivrance du brevet: **04.08.1993**
(21) Numéro de dépôt: 89401721.9
(22) Date de dépôt: 19.06.1989
(51) Int. Cl.: F16K 31/10, F16K 31/56, F16K 7/10

(54) **Microelectrovanne de commutation à une seule membrane**
Elektrisches Mikro-Umschaltventil mit einer einzigen Membran
Microelectric switch valve with one single diaphragm

(30) Priorité: 30.06.1988 FR 8808808
(43) Date de publication de la demande: 03.01.1990
(73) Titulaire: ABX, F-34184 Montpellier Cedex 4 (FR)
(72) Inventeur: Champseix, Serge, F-78130 Les Mureaux (FR)
(74) Mandataire: Lhuillier, René

(56) Documents cités:
- EP-A- 277 055
- DE-A- 3 503 357
- FR-A- 2 609 518

## Description

L'invention qui concerne une microélectrovanne de commutation destinée à tous fluides et particulièrement à des liquides agressifs ou chargés d'impuretés, a plus précisément pour objet une microélectrovanne à basculeur et une seule membrane.

Il existe des microvannes connues mettant en oeuvre deux membranes souples en matière plastique susceptibles de se déformer sous l'action du noyau d'un électroaimant pour obturer des orifices et en ouvrir d'autres, mais celles-ci peuvent présenter des inconvénients du fait de leurs difficultés de réglage dues à la multiplicité des pièces mises en oeuvre. On connait par le document EP-A-277 055 (FR-A-2609518) une microélectrovanne visant à pallier à ces inconvénients en ce que ladite microélectrovanne de commutation à au moins deux voies comporte un corps de vanne dans une alvéole duquel aboutissent des conduits d'arrivée et de départ de fluide et un organe mobile jouant le rôle d'obturateur de l'un ou l'autre de ces conduits et manoeuvré par le noyau d'un électro-aimant, microélectrovanne selon laquelle l'organe mobile est une membrane à déformation orientée appliquée par un basculeur contre l'un ou l'autre des conduits à obturer et selon laquelle le basculeur est déplacé de l'une à l'autre de ses deux positions d'équilibre correspondant aux deux positions d'obturation de la membrane par une pièce de commande se déplaçant dans le corps de vanne sous l'action du noyau de l'électro-aimant.

Avantageusement cette pièce de commande est un tiroir coulissant dans le corps de la vanne, lequel tiroir de commande étant placé dans un puits traversant le corps de vanne selon son axe longitudinal. Une de ses extrémités affleure à un orifice de sortie non obturé, dudit puits, et sa partie centrale comporte une ouverture destinée à recevoir une tige solidaire du basculeur. Le document EP-A-277 055 (FR-A-2609518) décrit une forme préférentielle de réalisation selon laquelle le basculeur a la forme d'une toupie dont une face avantageusement profilée de forme conique vient en appui sur la face correspondante de la membrane obturatrice, sous l'action d'un ressort, pour appliquer ladite membrane sur un ou des orifices en dégageant un ou des autres orifices voisins. La membrane ainsi liée au mouvement du basculeur doit pouvoir basculer sur un pivot, et une bille est prévue à cet effet, localisée dans une cuvette du corps vanne pour être centrée sur la membrane.

Pour limiter le nombre de pièces, en vue de faciliter encore le montage, il a été envisagé, de réaliser directement par moulage le flasque support de conduit avec sa bille, et de réaliser également en une seule autre pièce la membrane et son basculeur.

L'évolution des recherches menées dans ce sens par la Demanderesse l'ont conduite à élaborer une électrovanne conforme au document EP-A-277 055 (FR-A-2609518) mais qui l'améliore encore sur le plan de la miniaturisation, de la simplicité de réalisation et de la fiabilité de fonctionnement.

L'invention concerne donc une microélectrovanne de commutation à au moins deux voies comportant un corps de vanne dans une alvéole duquel aboutissent des conduits d'arrivée et de départ de fluide, et une membrane unique, jouant le rôle d'obturateur de ces conduits, manoeuvrés par le noyau d'un électro-aimant par l'intermédiaire d'un basculeur qui l'applique sur l'un ou l'autre desdits conduits, basculeur dont la tige perpendiculaire au plan de la membrane se place dans une alvéole d'un tiroir coulissant qui se déplace dans le corps de vanne sous l'action du noyau de l'électro-aimant.

Selon l'invention la membrane est constituée d'une partie extérieure flexible, légèrement profilée et de forme ovale et d'une partie centrale allongée à l'intérieur de laquelle est noyé le basculeur dont une face inférieure épouse le profil de la membrane, l'ensemble membrane basculeur étant articulé sur un axe traversant un orifice de section oblongue prévu transversalement dans le basculeur et prenant appui sur des ailes solidaires du corps de vanne.

L'alvéole du tiroir mobile étant de faible profondeur, ne traversant pas l'épaisseur du tiroir et étant orientée radialement par rapport à l'axe du corps de vanne.

Avantageusement la membrane est pincée entre les bords d'une ouverture prévue sur une face latérale du corps de vanne et un flasque profilé qui ferme ladite ouverture, ladite face latérale présentant un profil général en forme de V très aplati dont deux rebords longitudinaux également en forme de V encadrent l'ouverture.

D'autres caractéristiques particulières et avantages de l'invention apparaîtront à la lecture de la description qui va suivre d'une forme de réalisation faisant référence aux dessins annexés qui représentent :
figure 1 une vue schématique en coupe de la microélectrovanne ;
figure 2 une vue en coupe du corps de vanne ;
figure 3 une vue en plan de la face inférieure du corps de vanne ;
figure 4 une vue en coupe à plus grande échelle du flasque rapporté sur le corps de vanne ;
figure 5 une vue en plan à plus grande échelle de la face supérieure du flasque selon la figure 4 ;
figures 6 et 7 des vues en plan et en coupe de la membrane avec son basculeur.

La microélectrovanne représentée sur les dessins a la forme générale d'un boîtier rectangulaire en matière plastique qui constitue le corps de vanne 1. Il est percé selon son axe longitudinal AA' d'un puits 2 de forme cylindrique à l'intérieur duquel est placé un tiroir de commande 3. Une extrémité cylindrique 4 du tiroir qui coulisse dans le puits 2 peut affleurer son orifice de sortie. Une chambre 6 est ménagée entre le fond du puits et l'autre extrémité du tiroir 3. Cette chambre 6 communique avec l'extérieur du corps de vanne 1 par une ouverture qui reçoit le noyau mobile 7 d'un électroaimant non représenté. Ce noyau se termine par une tête de noyau formant ergot d'accrochage 8 d'une mâchoire profilée 5 prévue à l'extrémité du tiroir 3. Un ressort 10 est en outre intercalé entre le fond de la chambre 6 et le tiroir. Ce dernier porte une alvéole 12 de faible profondeur qui ne traverse pas l'épaisseur du tiroir et qui est orientée radialement par rapport à l'axe AA';

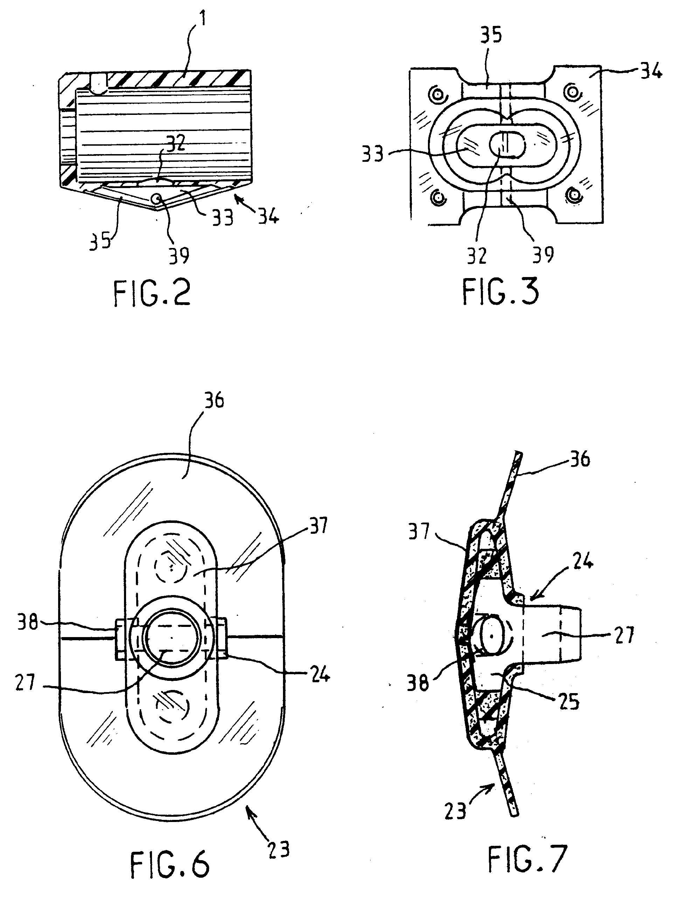

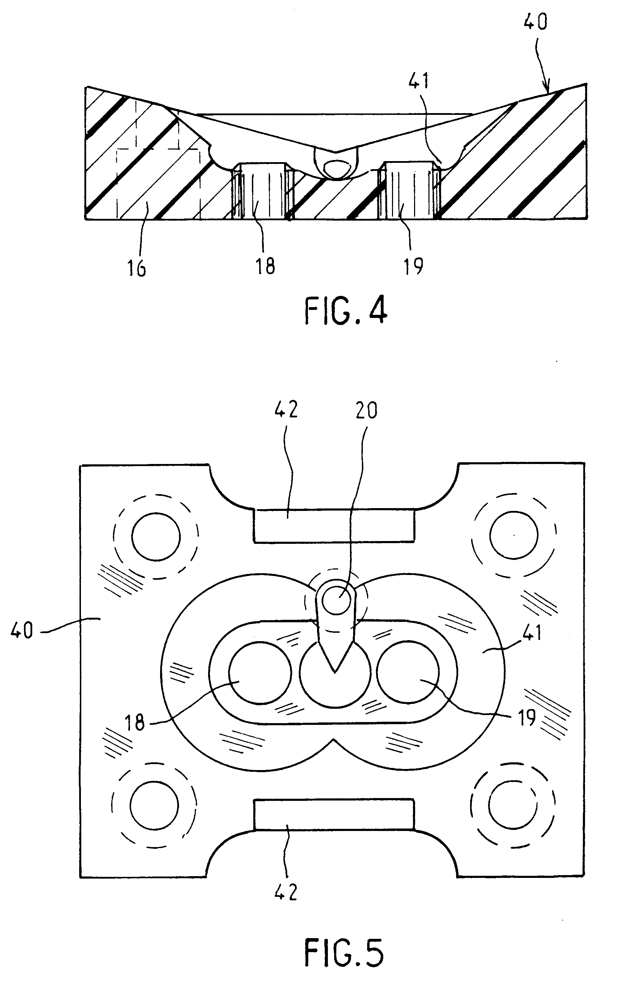

Une face latérale 34 du corps de vanne 1 présentant un profil général en forme de V très aplati est en outre percée d'une ouverture oblongue 32 au droit de l'ouverture 12 du tiroir. On voit plus précisément aux figures 2 et 3 que cette ouverture oblongue 32 est elle même centrée dans une coupelle 33 de forme générale ovale obtenue en creux par moulage dans ladite face latérale 34 du corps de vanne. La coupelle 33 et l'ouverture 32 sont centrées sur la pointe du V. De ce fait, de part et d'autre des bords longitudinaux de la coupelle en creux 33, se trouvent constitués deux rebords longitudinaux 35 en forme V qui surplombent et encadrent la coupelle creuse 33 et l'ouverture 32 le long de sa bordure longitudinale. Les bords de la coupelle 33 sont profilés pour servir de siège à une membrane étanche 23 qui est pincée entre le corps de vanne 1 et un flasque de fermeture 16 qui est vissé sur celui-ci. La membrane délimite avec le flasque une chambre de faible volume 17. Le flasque 16 est traversé par trois petits conduits d'alimentation ou de départ de fluide 18, 19 et 20. Chacun de ces conduits débouche dans ladite chambre 17. Deux conduits 18 et 19 s'ouvrent sur la chambre 17 à l'intérieur d'une couronne formant un relief sur le fond du flasque. Le troisième conduit 20 débouche directement sur le fond du flasque. La forme et le profil du flasque 16 apparaissent plus clairement sur les figures 4 et 5. On y retrouve une face supérieure 40 ayant un profil en forme de V qui correspond à la face 34 du corps de vanne. Les trois conduits 18, 19, 20 débouchent au fond d'une coupelle creuse oblonge 41 pouvant également recevoir la membrane 23. Des nervures latérales 42 sont en outre prévues sur deux côtés latéraux du flasque 16, de part et d'autre de la coupelle creuse 41, et sont destinées à coopérer avec des dégagements correspondants de la face latérale 34 du corps de vanne, ceci pour assurer le parfait positionnement du flasque sur ledit corps de vanne et maintenir axialement l'axe 21 en place.

La membrane 23 présente une configuration particulière mieux visible sur les figures 6 et 7. Elle est constituée d'une partie extérieure flexible 36 très souple légèrement profilée en V de façon identique au profil du corps de vanne et de forme ovale dont la dimension correspond à celle de la coupelle 33 et d'une partie centrale allongée 37.à l'intérieur de laquelle est noyé un basculeur 24 dont une face inférieure 25 épouse le profil de la membrane et dont la partie supérieure 27 en forme de tige perpendiculaire au plan de la membrane est engagée au travers de l'ouverture 32 et pénètre dans l'alvéole 12 du tiroir 3. Le basculeur 24 est percé d'un orifice transversal 38. Cet orifice est oblong pour éviter la translation de la membrane. Quand la membrane 23 est pincée entre le corps de vanne 1 et le flasque 16, l'orifice 38 se trouve aligné avec des orifices 39 prévus au sommet profilé en V des rebords longitudinaux du corps de vanne qui forment des ailes latérales 35 surplombant la coupelle creuse 33. Un axe 21 traversant les deux orifices 39 et l'orifice 38 du basculeur assure le positionnement de la membrane et constitue son axe de pivotement. On notera que l'axe se trouve du côté de la membrane qui n'est pas en contact avec le liquide.

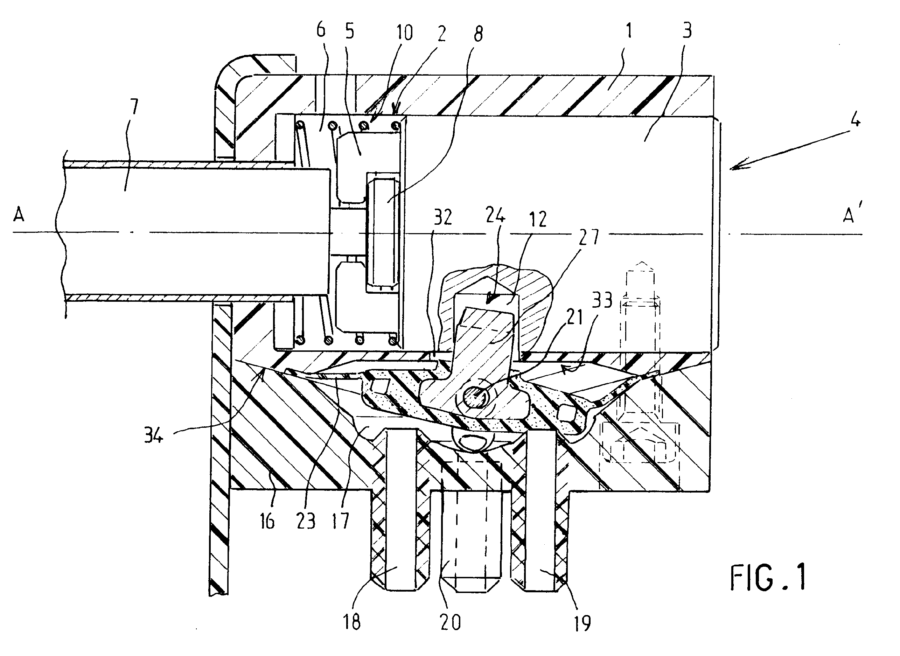

On voit à la figure 1 que la tige 27 du basculeur est en position légèrement inclinée à l'intérieur de l'alvéole 12 et maintenue ainsi en butée contre le bord de l'alvéole. Cette inclinaison est répercutée par une inclinaison de la membrane 23 dont la partie souple 37 alors appliquée contre l'orifice du conduit 19 qu'elle obture, tandis que le conduit 18 communique librement avec la chambre 17. Cette position est la position repos de l'électrovanne, pour laquelle l'électroaimant n'est pas excité. Sous l'action du ressort 10 le tiroir 3 est maintenu dans la position déplacée vers la droite, comme représenté, son extrémité 4 affleurant l'ouverture du puits 2. Le fluide admis dans la chambre 17 par le conduit 20 passe donc librement vers le conduit 18.

Dès que l'électro-aimant est excité, le noyau 7 exerce une traction sur l'extrémité 5 du tiroir 3 par l'intermédiaire de sa tête d'accrochage 8, à l'encontre de la force du ressort 10. Le tiroir 3 se déplace alors vers la gauche à partir de la position de la figure 1. Au cours de ce mouvement le bord de l'alvéole 12 a attaqué le bord de la tige 27 et entraîné le pivotement du basculeur 24. La membrane 23 s'est inclinée alors, en pivotant sur son axe 21, dans la position inverse de la précédente où elle se dégage du conduit 19 pour se plaquer sur le conduit 18. La communication de fluide est alors établie entre le conduit 20 et le conduit 19. Du fait du relief de l'extrémité des conduits 19, 20 par rapport au fond de la coupelle, la portion 37 de la membrane 23 peut s'écraser sur son siège et il ne peut y avoir de mauvaise fermeture due aux impuretés.

Dès que cesse l'excitation de l'électro-aimant, le ressort 10 repousse le tiroir 3 dans la position originale de la figure 1 et la pression du ressort, par l'intermédiaire du basculeur, assure le verrouillage dans cette position. On notera que l'usager peut aussi agir lui-même pour manoeuvrer le tiroir en appuyant sur l'extrémité 4 qui affleure sur un côté de l'électrovanne, c'est-à-dire que la vanne reste utilisable manuellement en cas de défaillance de l'électroaimant.

La chambre 17 entre la membrane 23 et le flasque 16 étant de petite dimension, le volume mort de fluide est peu important ce qui rend le rinçage facile. En outre la membrane unique joue non seulement le rôle de clapet de fermeture sur son siège mais assure également une parfaite étanchéité avec le milieu extérieur et avec le puits intérieur 2 dans lequel coulisse le tiroir 3. Cette étanchéité est assurée aussi bien pour des liquides sous pression que pour des fluides gazeux à forte ou faible pression, voire au vide. L'encombrement du corps de vanne 1 est réduit sans pour autant réduire la section de passage du fluide par les conduits 18, 19 et 20.

Cette microvanne de commutation peut être montée et fixée en batterie dans un espace restreint, les conduits disposés d'un même côté facilitant leur implantation. Les microvannes sont avantageusement réalisées en matériaux susceptibles de résister aux fluides agressifs et trouvent une application préférentielle dans les matériels d'analyses médicales mais aussi dans les industries alimentaires et autres.

## Revendications

1. Microélectrovanne de commutation à au moins deux voies comportant un corps de vanne (1) dans une alvéole duquel aboutissent des conduits d'arrivée et de départ de fluide (18,19,20), et une membrane unique (23), jouant le rôle d'obturateur de ces conduits (18,19,20), manoeuvré par le noyau (7) d'un électro-aimant par l'intermédiaire d'un basculeur (24) qui l'applique sur l'un ou l'autre desdits conduits, basculeur (24) dont la tige (27) perpendiculaire au plan de la membrane (23) se place dans une alvéole (12) d'un tiroir coulissant (3) qui se déplace, dans le corps de vanne (1) sous l'action du noyau (7) de l'électroaimant, la membrane (23) étant constituée d'une partie extérieure flexible (36) légèrement profilée en V et de forme ovale et d'une partie centrale allongée (37) à l'intérieur de laquelle est noyé le basculeur (24) dont une face inférieure (25) épouse le profil de la membrane, et l'ensemble membrane basculeur (23, 24) étant articulé sur un axe (21) traversant un orifice (38) de section oblongue prévu transversalement dans le basculeur (24) et prenant appui sur des ailes (35) solidaires du corps de vanne (1).

2. Microélectrovanne selon la revendication 1, caractérisée en ce que l'alvéole (12) du tiroir (3) est de faible profondeur, ne traverse pas l'épaisseur du tiroir (3) et est orientée radialement par rapport à l'axe AA' du corps de vanne (1).

3. Microélectrovanne selon la revendication 1, caractérisée en ce que la membrane (23) est pincée entre les bords d'une ouverture (32) prévue sur une face latérale (34) du corps de vanne et un flasque profilé (16) qui ferme ladite ouverture, ladite face latérale (34) présente un profil général en forme de V très aplati dont deux rebords longitudinaux (ailes 35) également en forme de V encadrent l'ouverture (32).

4. Microélectrovanne selon la revendication 3, caractérisée en ce que l'ouverture (32) est centrée dans une coupelle (33) de forme générale ovale obtenue en creux par moulage dans la face latérale (34) du corps de vanne (1), coupelle servant de siège à la membrane étanche (23).

5. Microélectrovanne selon la revendication 3, caractérisée en ce que des nervures latérales (42) sont prévues sur deux côtés latéraux du flasque (16) pour coopérer avec des dégagements correspondants de la face latérale (34) du corps de vanne.

## Patentansprüche

1. Elektromagnetisch betätigbares Microumschaltventil mit mindestens zwei Ventilwegen und einem Ventilgehäuse (1), in dessen Ausnehmung die Eintritts- und Austrittsleitungen (18, 19, 20) für die Strömungsmittel angeordnet sind und mit einer einzigen Membran (23), die als Verschlußstück für die Leitungen (18, 19, 20) dient, wobei die Betätigung mit dem Kern eines Elektromagneten über eine Wippe (24) erfolgt, die die eine oder andere der Leitungen ausschaltet, wobei ferner ein senkrecht zur Ebene der Membrane (23) ausgerichteter Zapfen (27) in eine Ausnehmung (12) des Steuerschiebers (3) eingreift, der sich im Ventilgehäuse (1) unter dem Einfluß des Kernes (7) des Elektromagneten bewegen kann, dadurch gekennzeichnet, daß die Membrane (23 ) ein ovales und schwach V-förmig profiliertes flexibles Außenteil (36), und ein längliches Mittelteil (37) aufweist, an dessen innen der Wippe (24) eingebettet ist, während seine Unterseite (25) dem Profil der Membrane folgt, um die Gesamtheit von Membrane und Wippe (23, 24) um eine Achse (21) verschwenkbar zu machen, die eine Öffnung (38) von länglichem Querschnitt quer zur Wippe (24) durchsetzt und sich an Außenteilen (35) anstützt, die ein fester Bestandteil des Ventilgehäuses (1) sind.

2. Microumschaltventile nach Anspruch 1, dadurch gekennzeichnet, daß die Ausnehmung (12) des Schiebers (3) eine geringe Tiefe hat und nicht die Wandstärke des Schiebers (3) durchquert und bezüglich der Achse (AA') des Ventilgehäuses (1) radial ausgerichtet ist.

3. Microumschaltventile nach Anspruch 1 und 2, dadurch gekennzeichnet, daß die Membrane (23) zwischen den Rändern einer Öffnung (32) an der Seitenfläche (34) des Ventilgehäuses und einem profilierten Verschlußstopfen (16) eingespannt ist, welch letzterer die Öffnung (32) verschließt, wobei die Seitenfläche (34) ein sehr flaches, im wesentlichen V-förmiges Profil hat und wobei zwei flügelartige Längskanten (35) ebenfalls in V-förmiger Ausrichtung die öffnung (32) umgeben.

4. Microumschaltventil nach Anspruch (3) dadurch gekennzeichnet, daß die Öffnung (32) im Inneren einer flachen, im wesentlichen ovalen Schale (33) zentriert ist, deren Höhlung in der Seitenfläche des Ventilgehäuses (1) durch Ausformen ausgebildet ist, wobei das flache, schalenförmige Teil der Abdichtungsmembrane (23) auch als Ventilsitzfläche dient.

5. Microumschaltventil nach Anspruch 3 dadurch gekennzeichnet, daß an zwei Seitenflächen des Verschlußstopfens (16) seitliche Führungsflächen (42) ausgebildet sind zur Zusammenarbeit mit entsprechenden Seitenflächen (34) des Ventilgehäuses.

## Claims

1. A switching micro solenoid valve having at least two ways, comprising a valve body (1) having a compartment in which fluid inlet and outlet ducts (18, 19, 20) terminate, and a single diaphragm (23), acting as a closure member for the said ducts (18, 19, 20) and actuated by the core (7) of an electromagnet via a rocker (24) which applies the said diaphragm on to one or the other of the said ducts, the rod (27) of the rocker element (24) which is perpendicular to the plane of the diaphragm (23) being located in a recess (12) of a control slide (3) which is displaced within the valve body (1) under the action of the core (7) of the electromagnet, the diaphragm (23) being formed by an external flexible part (36) which has a profile in the form of a shallow V and is oval in shape, and an elongated central part (37) within which the rocker (24) is embedded, a lower face (25) of the rocker mating with the profile of the diaphragm, and the diaphragm-rocker (23, 24) assembly being articulated about a spindle (21) passing through an orifice (38) of oblong cross-section provided transversely in the rocker (24) and bearing on wings (35) integral with the valve body (1).

2. A micro-solenoid valve according to claim 1, characterised in that the recess (12) of the slide (3) is of a shallow depth less than the thickness of the slide (3) and is radially oriented with respect to the axis AA' of the valve body (1).

3. A micro-solenoid valve according to claim 1, characterised in that the diaphragm (23) is pinched between the sides of an aperture (32) provided in a side face (34) of the valve body and a profiled end-plate (16) which closes the said aperture, the said side face (34) has an overall profile in the shape of a very flat V, two longitudinal flanges (wings 35) of which are also V-shaped and frame the aperture (32).

4. A micro-solenoid valve according to claim 3, characterised in that the aperture (32) is centred in a cup (33) having a generally oval shape and hollowed out by moulding in the side face (34) of the valve body (1), the said cup acting as a seat for the fluid-tight diaphragm (23).

5. A micro-solenoid valve according to claim 3, characterised in that side ribs (42) are provided on two side faces of the end-plate (16) to cooperate with corresponding recesses in the side face (34) of the valve body.
